# FASCICULE DE BREVET EUROPEEN

(11) **EP 1 900 314 B1**
(45) Date de publication et mention de la délivrance du brevet: **02.06.2010**
(21) Numéro de dépôt: 07291092.0
(22) Date de dépôt: 11.09.2007
(51) Int. Cl.: A47J 31/40, A47J 31/36

(54) **Machine pour préparer une infusion équipée d'un dispositif d'éjection d'une dose de produit infusé**
Maschine zur Zubereitung von Getränken, die mit einer Ausstossvorrichtung für eine verbrauchte Getränke-Dosis ausgestattet ist
Machine for preparing an infusion equipped with a device for ejecting a dose of infused product

(30) Priorité: 15.09.2006 FR 0608117
(43) Date de publication de la demande: 19.03.2008
(73) Titulaire: SEB S.A., 69130 Ecully (FR)
(72) Inventeur: Turpin, Romain, 14210 Sainte Honorine du Fay (FR); Brodin, Didier, 14790 Verson (FR); Launay, Gérard, 14190 Cauvicourt (FR)
(74) Mandataire: Kiehl, Hubert

(56) Documents cités:
- EP-A2- 1 477 092

## Description

La présente invention se rapporte à une machine pour préparer une infusion, par exemple du café, qui comprend un dispositif d'éjection d'une dose de produit infusé. Plus particulièrement, l'invention se rapporte à une machine comprenant:
- un boîtier ;
- une chambre d'infusion apte à recevoir une dose de produit à infuser et délimitée au moins par une première partie et une deuxième partie mobiles l'une par rapport à l'autre entre une position de fermeture dite d'infusion et une position d'ouverture, ladite deuxième partie au moins étant mobile par rapport au boîtier ; et
- un dispositif d'éjection apte à éjecter la dose de produit infusé à l'écart des première et deuxième parties en position d'ouverture.

La dose de produit à infuser peut se présenter sous forme d'une capsule métallique ou plastique rigide, sous forme d'une dose semi-rigide comme par exemple une dose de mouture compactée emballée dans un papier filtre, ou sous forme d'une dosette souple formée par un sachet de papier filtre contenant de la mouture non tassée, voire sous forme d'une galette de mouture en vrac présentant un aspect relativement compact après l'opération d'infusion.

Il est utile de prévoir un dispositif d'éjection vers un bac de récupération intégré pouvant contenir plusieurs doses de produit infusé pour automatiser le fonctionnement de la machine et éviter la manipulation des doses de produit par l'utilisateur.

Divers types de systèmes d'éjection ont été mis au point. Parmi ceux-ci, on peut citer les dispositifs comportant un bras effectuant un mouvement de balayage sur un plateau situé au niveau du débouché de la partie inférieure de la chambre d'infusion. Le mouvement du bras de balayage est généralement commandé par un actionneur supplémentaire, ce qui bien entendu augmente la complexité et le coût de la machine. Afin d'éviter l'emploi d'un actionneur supplémentaire, il a été proposé dans la demande de brevet français FR 05 03491 déposée le 7 avril 2005 au nom de la demanderesse, de commander le déplacement du bras de balayage par le déplacement de la partie mobile de la chambre d'infusion. Pour cela, un chemin de came fixé à cette partie mobile guide positivement une extrémité du bras de balayage. Toutefois, cette solution n'est pas entièrement satisfaisante notamment pour des raisons d'encombrement. De plus, elle peut engendrer des contraintes mécaniques excessives étant donné que le mouvement de balayage du bras doit être relativement rapide pour éjecter la dose de produit infusé jusqu'au bac de récupération, tandis que le mouvement de la partie mobile de la chambre est préférentiellement plus lent.

Un autre document représentant l'art antérieur est le brevet EP 1 477 092 B1.

La présente invention a pour but de fournir un dispositif d'éjection d'une dose de produit infusé, qui soit de construction et de commande simples afin de réduire son coût.

A cet effet, la présente invention a pour objet une machine pour préparer une infusion du type précité, caractérisée en ce que le dispositif d'éjection comprend un organe d'éjection mobile de manière bistable sous l'action d'un organe élastique entre une position stable d'effacement dans laquelle il est situé à l'écart des première et deuxième parties en position d'infusion, et une position stable d'éjection dans laquelle il est amené au moins partiellement entre les première et deuxième parties en position d'ouverture, l'organe d'éjection comprenant une butée d'effacement et une butée d'éjection aptes à coopérer par contact respectivement avec une première et une deuxième butées complémentaires, le déplacement de la deuxième partie de la chambre d'infusion vers la position d'infusion provoquant le passage de l'organe d'éjection en position d'effacement par coopération de la butée d'effacement avec la première butée, et le déplacement de la deuxième partie de la chambre d'infusion vers la position d'ouverture provoquant le passage de l'organe d'éjection en position d'éjection par coopération de la butée d'éjection avec la deuxième butée.

La commande de l'organe d'éjection ainsi réalisée par contact entre des butées est particulièrement simple. D'autre part, le nombre et la taille des pièces mobiles peuvent être particulièrement réduits. En effet, il suffit d'agencer les première et deuxième butées complémentaires par rapport aux butées de l'organe d'éjection, en tenant compte du déplacement de la deuxième partie de la chambre d'infusion, pour que le passage de l'organe d'éjection d'une position stable à l'autre se produise au bon moment. On notera que ces butées complémentaires peuvent être solidaires du boîtier si l'organe d'éjection est déplacé avec la deuxième partie de la chambre. Mais les butées complémentaires pourraient être solidaires de cette deuxième partie mobile, si l'organe d'éjection est monté sur le boîtier.

Par ailleurs, le fait que l'organe d'éjection soit bistable sous l'action d'un organe élastique, permet un passage automatique d'une position à l'autre, sans commande positive par un actionneur, et ce avec une vitesse et une force qui sont prédéterminées, notamment par la force de rappel de l'organe élastique. Ceci est favorable pour la fiabilité et la reproductibilité de l'opération d'éjection.

Dans des modes de réalisation préférés de l'invention, on a recours en outre à l'une ou l'autre des dispositions suivantes:
- la deuxième partie de la chambre d'infusion est mobile selon un mouvement de translation de direction déterminée, l'organe d'éjection étant monté pivotant autour d'un axe perpendiculaire à ladite direction déterminée, ce qui fournit une cinématique particulièrement simple ;
- l'organe d'éjection est monté sur la deuxième partie de la chambre d'infusion, et les première et deuxième butées complémentaires sont fixes et solidaires du boîtier. Ainsi, le dispositif d'éjection est éloigné de la première partie de la chambre d'infusion en même temps que la deuxième partie lors du passage à la position d'ouverture, ce qui est particulièrement intéressant pour ménager un espace libre entre les deux parties de la chambre d'infusion, en vue par exemple d'effectuer une opération de maintenance ;
- l'organe d'éjection est formé par une pièce en "L" dont une première branche est montée pivotante par rapport à la deuxième partie de la chambre d'infusion à proximité d'une extrémité libre de cette première branche, et dont une deuxième branche forme un bras d'expulsion de la dose de produit infusé ;
- en position stable d'éjection, la première branche de l'organe d'éjection s'étend selon une direction sensiblement parallèle à la direction déterminée et la deuxième branche s'étend parallèlement et à proximité d'une face d'extrémité de la deuxième partie de la chambre d'infusion venant en regard contre la première partie en position d'infusion, ce qui limite encore l'encombrement du dispositif d'éjection dans la machine ;
- la butée d'éjection est constituée par une face extérieure de la première branche de l'organe d'éjection, tandis que la butée d'effacement est formée par une projection solidaire de ladite première branche ;
- l'organe d'éjection en position stable d'effacement est situé au-delà du plan défini par les faces des extrémités respectives des première et deuxième parties en position d'infusion, toujours dans le but de minimiser l'encombrement du dispositif d'éjection et permettre, par exemple, la présence d'une goulotte d'amenée par gravité des doses de produit à infuser du côté de l'organe d'éjection ;
- les première et deuxième butées complémentaires sont formées respectivement par deux faces opposées d'une même tige ;
- l'organe élastique est un ressort de torsion présentant des extrémités montées entre un premier axe de pivotement solidaire de la deuxième partie de la chambre d'infusion, et un deuxième axe de pivotement solidaire de l'organe d'éjection, les premier et deuxième axes formant des angles opposés sensiblement identiques par rapport au plan défini par le premier axe et l'axe de pivotement de l'organe d'éjection pour chacune des positions stables de celui-ci, ce qui permet une certaine symétrie du mouvement d'une position stable à l'autre ; et
- un dispositif d'extraction est prévu pour sortir la dose de produit infusé hors de la chambre d'infusion à la suite d'une opération d'infusion, et la butée d'éjection du dispositif d'éjection est agencée par rapport à la deuxième butée complémentaire pour commander le passage de l'organe d'éjection en position d'éjection une fois que le dispositif d'extraction a extrait la dose de produit infusé hors de la chambre d'infusion. Le mouvement de l'organe d'éjection peut alors être rapide et cinématiquement simple, surtout s'il s'agit d'une capsule rigide, étant donné que la dose de produit infusé est alors largement dégagée de la chambre d'infusion.

D'autres caractéristiques et avantages de l'invention ressortiront de la description qui va suivre, donnée à titre d'exemple non limitatif en référence aux figures annexées, dans lesquelles :
- la figure 1 est une vue en perspective arrachée d'une machine pour préparer une infusion comprenant une chambre d'infusion en deux parties en position ouverte et équipée d'un dispositif d'éjection d'une dose de produit infusé selon l'invention ;
- la figure 2 est une vue partielle agrandie de droite des deux parties de la chambre d'infusion représentée à la figure 1 ;
- la figure 3 est une vue partielle agrandie de face de la chambre d'infusion représentée à la figure 1 ;
- la figure 4 est une vue analogue à la figure 3 pour laquelle les deux parties de la chambre d'infusion sont dans une première position intermédiaire entre la position ouverte et une position d'infusion ;
- la figure 5 est une vue analogue à la figure 3 pour laquelle les deux parties de la chambre d'infusion sont en position d'infusion ;
- la figure 6 est une vue partielle agrandie de gauche par rapport à la figure 1 de la chambre d'infusion dont les deux parties sont en position d'infusion ;
- la figure 7 est une vue analogue à la figure 6 pour laquelle les deux parties de la chambre d'infusion sont dans une deuxième position intermédiaire entre la position d'infusion et la position d'ouverture ;
- la figure 8 est une vue partielle agrandie de face des deux parties de la chambre d'infusion dans la deuxième position intermédiaire, et
- la figure 9 est une vue analogue à la figure 3 pour laquelle le dispositif d'éjection expulse la dose de produit infusé.

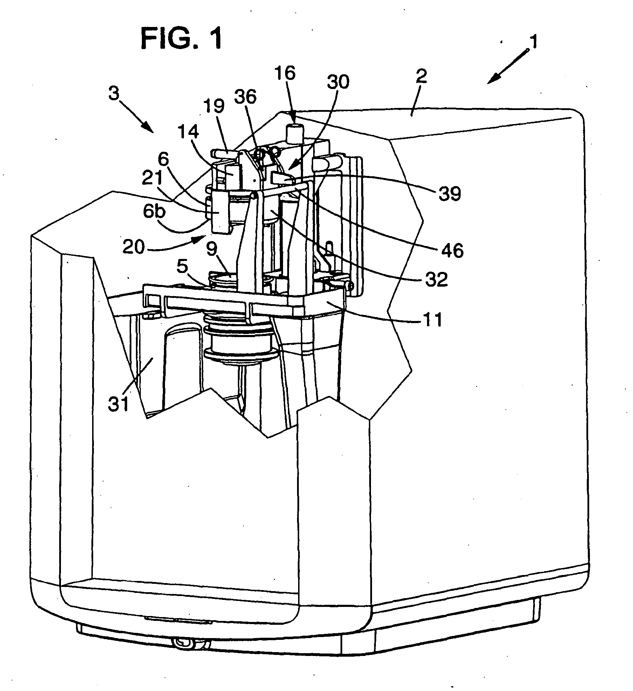

A la figure 1, est représentée une machine à café 1 comprenant un boîtier 2 et un système d'infusion 3. La machine à café 1 comprend également de manière bien connue un réservoir d'eau, une unité électronique de commande, un générateur électrique d'eau chaude sous pression et une goulotte d'amenée de doses de produit à infuser pour charger le système d'infusion, non visibles sur les figures.

Le système d'infusion 3 comprend une chambre d'infusion délimitée par une première partie inférieure 5 et une deuxième partie supérieure 6.

La première partie 5 forme un réceptacle qui présente un fond, une paroi intérieure présentant une symétrie de révolution, et un débouché supérieur délimité par un pourtour annulaire 5a.

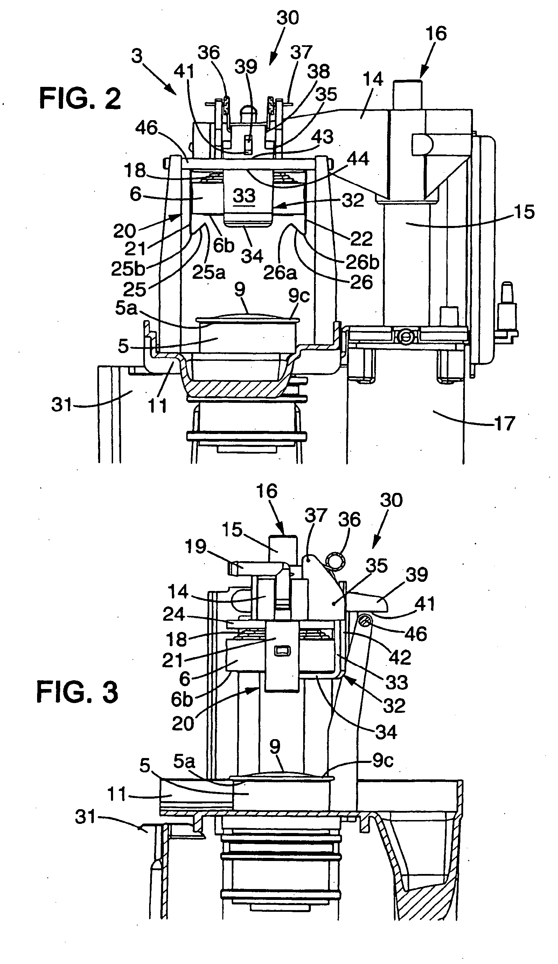

Le fond et la paroi intérieure du réceptacle 5 sont conformés pour recevoir au moins en partie une dose 9 de produit à infuser. Dans le mode de réalisation représenté, figure 2, la dose 9 est une capsule métallique présentant une paroi annulaire tronconique s'étendant depuis un fond perçable jusqu'à une collerette annulaire 9c définissant une face supérieure fermée par une membrane déchirable. Bien entendu, il pourrait s'agir d'autres types de capsules rigides se présentant sous forme d'un boîtier métallique ou plastique sensiblement rigide contenant une dose prédéterminée de mouture de café ou de tout autre produit susceptible d'être infusé, comme par exemple du thé, du lait en poudre ou du chocolat en poudre. La dose de produit à infuser pourrait également se présenter sous la forme d'une dose semi-rigide de mouture compactée et emballée dans un papier filtre, ou sous forme d'une dose souple de mouture contenue dans un sachet de papier filtre, couramment appelé dosette. Il est également envisageable, moyennant certains aménagements, d'adapter le système d'infusion 3 pour que la chambre d'infusion (5, 6) puisse recevoir de la mouture de café en vrac.

La première partie 5 formant réceptacle est solidaire d'une platine horizontale 11 reliée de manière fixe au boîtier 2, de sorte que le réceptacle 5 est immobile par rapport au boîtier 2.

La deuxième partie 6 de la chambre d'infusion forme un couvercle qui présente, sur sa face inférieure 6b en regard avec le débouché du réceptacle 5, une empreinte complémentaire à la face supérieure de la capsule 9.

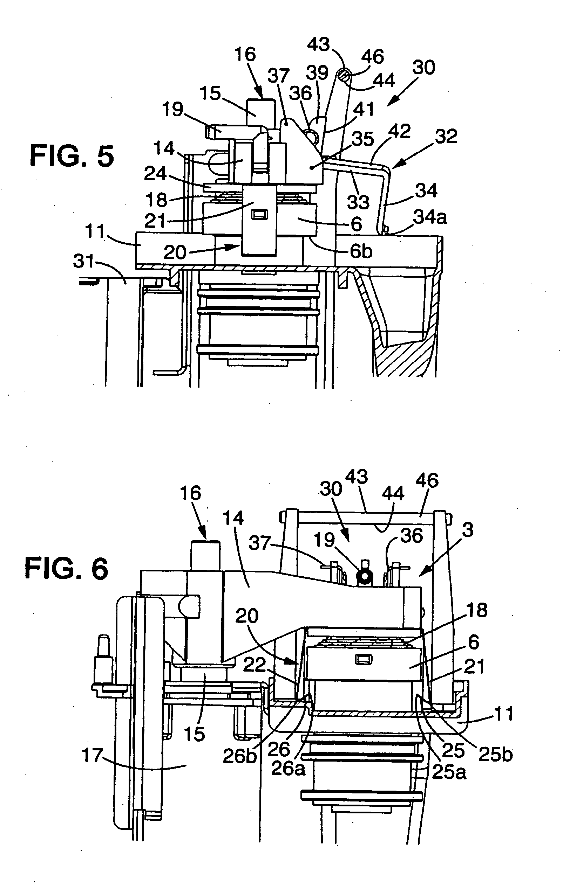

Le couvercle 6 est relié à une potence 14 fixée à une extrémité de la tige 15 d'un vérin hydraulique 16 comportant un cylindre 17 solidaire du boîtier 2. Le déplacement de la tige 15 du vérin 17 commandé par l'unité électronique, permet de déplacer le couvercle 6 par rapport au réceptacle fixe 5 depuis une position d'ouverture représentée aux figures 1, 2 et 3 jusqu'à une position de fermeture représentée aux figures 5 et 6.

En position de fermeture (figures 5 et 6), le couvercle 6 est pressé contre la collerette 9c en direction du débouché du réceptacle 5, notamment grâce à un ressort de compression 18 interposé entre la potence et le couvercle. Le ressort 18 autorise un léger déplacement du couvercle 6 par rapport à la potence 14 au moment de la fermeture. Mais en dehors de cette phase de fermeture, ces éléments peuvent être considérés comme rigidement liés et la potence 14 constitue un support du couvercle 6.

Dans cette position de fermeture, le réceptacle 5, le couvercle 6 et la capsule 9 délimitent un espace étanche dans lequel de l'eau chaude sous pression est injectée pour infuser le produit contenu dans la capsule 9. La position fermée correspond donc à une position d'infusion.

Dans le mode de réalisation particulier représenté, la capsule 9 est percée à son extrémité inférieure par au moins une aiguille creuse délivrant de l'eau chaude sous une pression pouvant atteindre 15 bars, et la face supérieure de la capsule 9 est déchirée contre une grille de perforation, agencée dans l'empreinte du couvercle 6, sous l'effet de la pression de l'eau. L'infusion est dirigée par un conduit 19 débouchant dans le couvercle 6, vers un tuyau flexible et une sortie de café non représentés. Il s'agit donc d'une machine à café de type expresso avec une circulation ascendante de l'infusion. Néanmoins, il pourrait s'agir d'un autre type de machine expresso ou encore d'une machine à café utilisant de l'eau chaude sous une plus faible pression.

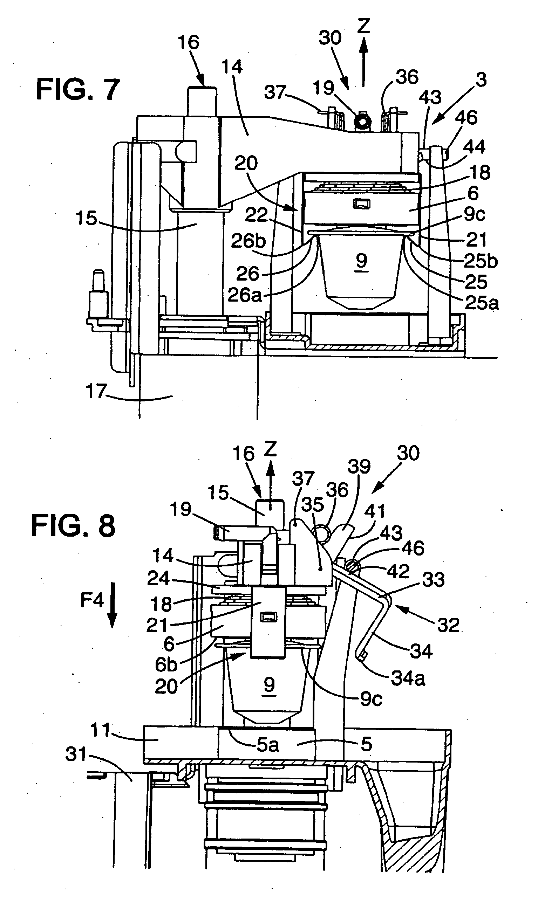

Le couvercle 6 est également mobile depuis la position de fermeture vers la position d'ouverture en effectuant un déplacement représenté aux figures 7, 8, 9 selon une direction d'ouverture indiquée par la flèche Z.

La direction d'ouverture Z est une direction verticale orientée vers le haut et co-axiale à l'axe de symétrie de la paroi intérieure du réceptacle 5.

Les mouvements de fermeture et d'ouverture du couvercle sont donc des mouvements de translation de sens opposés et colinéaires à la direction Z, la deuxième partie formant couvercle 6 de la chambre d'infusion étant mobile par rapport à la première partie fixe formant réceptacle 5. On pourra se référer à la demande de brevet WO-A-99/12455 pour plus de précisions sur la commande des déplacements du couvercle 6 et sur le circuit d'alimentation en eau chaude.

Toutefois, la mobilité relative entre les première (5) et deuxième (6) parties de la chambre d'infusion pourrait être sensiblement différente ; par exemple, la première partie 5 pourrait être mobile, tandis que la deuxième partie 6 pourrait être fixe ou non. De même, le mouvement relatif entre les première (5) et deuxième (6) parties pourrait être différent d'une translation et, par exemple, être un mouvement en arc de cercle au moins sur une première séquence du mouvement d'ouverture, du moment que la direction du mouvement d'ouverture ne forme pas un angle très prononcé avec le débouché du réceptacle 5 lors d'une phase initiale.

On notera qu'en position d'ouverture, le réceptacle 5 et le couvercle 6 sont écartés l'un de l'autre d'une distance suffisante pour permettre l'introduction de la capsule 9 dans le réceptacle 5, et dans le mode de réalisation représenté, d'une distance supérieure à la hauteur de la capsule 9. En effet, de préférence, la capsule 9 est introduite par gravité dans le réceptacle 5 à partir d'une goulotte d'amenée, non représentée, qui débouche au niveau de la platine 11 à proximité du réceptacle.

Le système d'infusion 3 comprend en outre un dispositif d'extraction 20 pour extraire la capsule 9 de produit infusé hors du réceptacle 5 après l'opération d'infusion.

Le dispositif d'extraction 20, figure 2, comporte deux organes de prise (21, 22) disposés de manière symétrique par rapport à l'axe du couvercle 6, c'est-à-dire par rapport à la direction d'ouverture Z . Chaque organe de prise (21;22) est constitué d'une languette métallique ou plastique élastiquement déformable s'étendant verticalement. Une extrémité supérieure de chaque languette (21;22) est fixée à la potence 14 de manière à déplacer les languettes (21, 22) et le couvercle 6 avec celle-ci.

L'extrémité inférieure de chacune des languettes (21;22) est située sous le niveau de la face inférieure 6b du couvercle, et est recourbée vers cette face de manière à former un bec (25 ; 26) pour chacune des languettes (21, 22) constituant les organes de prise. Les becs (25, 26) ainsi réalisés présentent une face extérieure orientée vers le réceptacle 5, et s'étendant de la base (25b;26b) de chacun des becs (25, 26) jusqu'à une extrémité libre (25a;26a) selon une direction ascendante vers la direction d'ouverture Z.

D'autre part, les becs (25, 26) sont agencés de manière à ce que leurs bases (25b, 26b) soient situées légèrement au-delà du diamètre extérieur de la collerette 9c de la capsule 9 par rapport à la direction d'ouverture, et à ce que leurs extrémités libres (25a, 26a) soient situées sur un diamètre inférieur au diamètre extérieur de la collerette 9c. Ainsi, on garantit que la face extérieure des becs (25, 26) vient en contact avec la périphérie de la collerette 9c de la capsule et glisse contre celle-ci de par son inclinaison et grâce à l'élasticité des organes de prise (21, 22) selon une direction radiale extérieure par rapport à la direction d'ouverture Z.

On notera que dans le mode de réalisation représenté, le pourtour annulaire 5a du réceptacle 5 présente un diamètre extérieur inférieur au diamètre extérieur de la collerette 9c de la capsule et se prolonge jusqu'à la platine 11 par un cylindre de même diamètre, de sorte que la collerette 9c de la capsule une fois introduite dans le réceptacle 5, est radialement saillante par rapport au pourtour 5a. Cette construction permet aux becs (25, 26) des organes de prise (21, 22) de venir en prise par encliquetage avec le bord inférieur de la collerette 9c de la capsule 9. La prise de la capsule 9 est ainsi effectuée par simple contact.

De manière alternative, il est possible de prévoir un réceptacle présentant un pourtour plus large mais muni de logements permettant la descente des organes de prise (21, 22). Il est également possible de prévoir un autre type de coopération entre un ou plusieurs organes de prise et la dose de produit infusé, par exemple en prévoyant à l'extrémité inférieure des organes de prise un harpon remplissant un rôle analogue aux becs (25, 26), mais qui crochèterait la paroi de la dose de produit infusé, notamment s'il s'agit d'une dosette. Dans ce cas, la coopération entre l'organe de prise et la dose de produit infusé pourrait être réalisée sur une surface de la dose qui serait simplement apparente au niveau du débouché du réceptacle 5.

Le système d'infusion comprend de plus un dispositif d'éjection 30 pour éjecter la dose de produit infusé 9 à l'écart du réceptacle 5 et du couvercle 6, vers un bac amovible 31 de récupération de capsules usagées.

Le dispositif d'éjection 30, figures 2 et 3, comprend un organe d'éjection 32 en forme de "L". Une première branche 33 de l'organe d'éjection en "L" est montée pivotante à proximité de son extrémité libre sur un axe 35 fixe par rapport à la potence 14 et perpendiculaire à la direction d'ouverture Z. L'organe d'éjection 32 est donc pivotant par rapport au couvercle 5 et déplacé en translation avec celui-ci.

La deuxième branche 34 du "L" forme un bras d'expulsion de la capsule 9. L'axe de pivotement 35 de l'organe d'éjection 32 est agencé de manière que le bras d'expulsion 34 soit situé sous la face inférieure 6b du couvercle, de préférence parallèlement et à proximité de cette face, pour occuper une première position, dite d'éjection, représentée aux figures 1 à 3.

L'organe d'éjection 32 peut prendre une deuxième position, dite d'effacement, représentée à la figure 5, pour laquelle le bras d'expulsion 34 est situé en dehors de l'espace compris entre les faces d'extrémité du réceptacle 5 et du couvercle 6, et pour laquelle l'extrémité 34a de ce bras d'expulsion est située au-dessus du plan de la platine 11, et même au-dessus du plan de la face inférieure 6b du couvercle. Ceci ménage un espace libre important à proximité du débouché du réceptacle 5.

Les positions d'éjection et d'effacement de l'organe d'éjection 32 sont des positions angulaires extrêmes entre lesquelles il peut pivoter librement. Ces positions d'éjection et d'effacement doivent être des positions stables, tandis que les positions intermédiaires entre celles-ci, c'est-à-dire écartées d'au moins quelques degrés, doivent être des positions instables pour lesquelles l'organe d'éjection 32 doit pivoter automatiquement vers l'une des positions stables.

Le caractère bistable de l'organe d'éjection 32 entre les positions d'éjection et d'effacement peut être obtenu de toute manière connue. Dans le mode de réalisation représenté, ceci est obtenu de manière simple à l'aide d'un ressort de torsion 36.

Plus précisément, une première extrémité du ressort 36 est montée pivotante autour d'un premier axe 37 lié au couvercle 6, et plus exactement à la potence 14 dans le mode de réalisation représenté. Le premier axe 37 est déplacé avec le couvercle 6 et est fixe par rapport à l'axe de pivotement 35 de l'organe d'éjection 32. La deuxième extrémité du ressort de torsion 36 est montée pivotante autour d'un deuxième axe 38 solidaire de l'organe d'éjection 32. En agençant les axes de pivotement (37, 38, 35) du ressort 36 et de l'organe d'éjection 32 de manière à ce que le deuxième axe de pivotement 38 du ressort 36 soit situé d'un côté du plan comprenant le premier axe de pivotement 37 et l'axe de pivotement 35 de l'organe d'éjection pour la position d'éjection, et de l'autre côté de ce plan pour la position d'effacement, on obtient une instabilité de l'organe d'éjection 32 entre ces deux positions.

Plus particulièrement, dans le mode de réalisation représenté, les angles formés par les extrémités du ressort de torsion 36 pour chacune de ces positions, sont opposés par rapport au plan passant par l'axe de pivotement 35 de l'organe d'éjection 32 et le premier axe 37 du ressort 36. L'effort exercé par le ressort de torsion 36 est alors sensiblement identique pour chacune des positions stables, et maximum dans une position médiane à partir de laquelle l'organe d'éjection 32 bascule vers l'une ou l'autre des positions stables. Le ressort de torsion 36 pourrait toutefois être un ressort de compression.

L'organe d'éjection 32 présente une projection 39 solidaire de la première branche 33, qui forme une première butée 41, dite d'effacement, s'étendant radialement vers l'extérieur par rapport à la direction d'ouverture Z.

L'organe d'éjection 32 comporte une deuxième butée 42, dite d'éjection, qui est simplement formée par la face de la première branche 33 radialement extérieure par rapport à la direction d'ouverture Z.

D'autre part, le dispositif d'éjection 30 comprend une première butée complémentaire 43 et une deuxième butée complémentaire 44 qui sont agencées de manière fixe par rapport au boîtier 2 de manière à venir coopérer par contact avec les butées d'effacement 41 et d'éjection 42 de l'organe d'éjection 32.

Dans le mode de réalisation représenté, les première (43) et deuxième (44) butées complémentaires sont réalisées par une même tige horizontale 46 portée par deux montants verticaux s'étendant à partir de la platine 11. Mais bien entendu les butées complémentaires (43, 44) pourraient être réalisées différemment, et notamment par deux organes distincts, du moment qu'elles sont sensiblement fixes par rapport au boîtier 2 de la machine et disposées par rapport au trajet du couvercle 6 de manière à venir en contact avec les butées d'effacement (41) et d'éjection (42) à des moments déterminés du déplacement du couvercle 6.

Un cycle de fonctionnement du système d'infusion 3, et plus particulièrement du fonctionnement des dispositifs d'extraction 20 et d'éjection 30, va maintenant être décrit en suivant la séquence des figures 2 à 9.

Aux figures 2 et 3, le réceptacle 5 et le couvercle 6 sont en position d'ouverture, ce qui correspond à une distance maximale entre ces deux parties (5, 6) de la chambre d'infusion et à une position haute maximale de la potence 14. Les organes de prise (21, 22) du dispositif d'extraction 20 sont donc également dans une position haute et sont élastiquement retenus contre la paroi latérale du couvercle 6. L'organe d'éjection 32 du dispositif 30 est en position stable d'éjection suite à l'éjection d'une capsule lors du précédent cycle.

Etant donné que le bras d'expulsion 34 s'étend parallèlement et à proximité de la face inférieure 6b du couvercle 6, un espace libre de hauteur importante est disponible au-dessus du débouché du réceptacle 5. Ceci facilite l'introduction d'une capsule par gravité dans le réceptacle 5 à partir de la goulotte d'amenée. De plus, cela permet un accès manuel à l'espace situé entre les deux parties (5, 6) de la chambre, par exemple à travers une trappe situé du côté du bac de récupération 31, afin d'effectuer une opération de nettoyage ou de maintenance.

Comme représenté aux figures 2 et 3, une capsule 9 est logée dans le réceptacle 5 lorsque le couvercle 6 est en position d'ouverture et avant le début de son déplacement vers la position d'infusion.

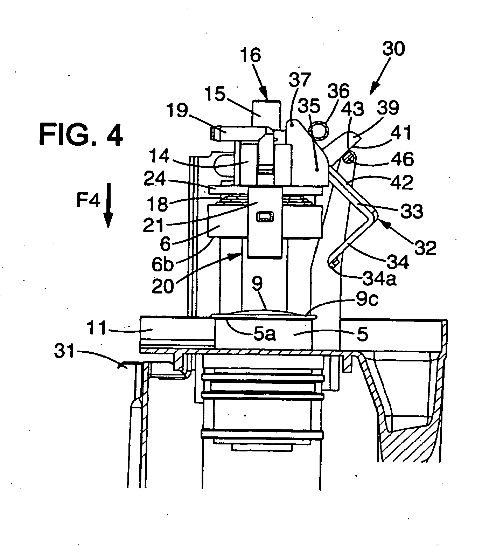

A partir de cette position initiale d'ouverture représentée aux figures 2 et 3, le cycle d'infusion commence par un déplacement du couvercle 6 vers le bas, indiqué par la flèche F4 de la figure 4. Ce déplacement créé par le vérin hydraulique 16 est commandé automatiquement par l'unité électronique de la machine. Il en est de même pour les séquences suivantes du cycle de fonctionnement.

Au cours du déplacement F4 vers le bas, figure 4, la butée d'effacement 41 de l'organe d'éjection 32 vient en contact avec la première butée complémentaire 43 formée par la face supérieure de la tige 46. Ce contact force un pivotement de l'organe d'éjection 32 depuis sa position stable d'éjection, et par conséquent un rapprochement du deuxième axe de pivotement 38 du ressort de torsion 36 vers le plan des axes de pivotement (35, 37) pour atteindre ce plan dans la position précisément représentée à la figure 4.

Lorsque le mouvement de descente F4 se poursuit, l'organe d'éjection 32 pivote automatiquement vers la position stable d'effacement représentée à la figure 5. Il atteint cette position d'effacement bien avant la descente complète du couvercle 6 étant donné que le pivotement automatique de l'organe d'éjection 32 est quasiment immédiat par rapport au déplacement du couvercle commandé par le vérin hydraulique 16.

A la fin du mouvement de descente, le couvercle 6 atteint la position d'infusion représentée aux figures 5 et 6, pour laquelle la chambre d'infusion est délimitée de manière étanche. Il est à noter que c'est seulement à proximité de cette position d'infusion qu'un léger mouvement relatif entre le couvercle 6 et la potence 14 peut apparaître du fait de la compression du ressort 18 permettant de compenser d'éventuels jeux et d'assurer l'étanchéité.

Comme on peut le voir à la figure 5, l'organe d'éjection 32 est en position stable d'effacement et est situé au-dessus de la face inférieure 6b du couvercle. Il n'interfère donc pas avec la platine 11 et peut être situé dans le débouché inférieur de la goulotte d'amenée non représentée.

Comme cela est visible à la figure 6, les organes de prise (21, 22) ont franchi la collerette 9c de la capsule grâce à leur élasticité radiale. Les organes de prise (21, 22) sont légèrement écartés du fait du contact des extrémités libres (25a, 26a) des becs (25, 26) avec la paroi extérieure cylindrique du réceptacle 5.

Dans cette position d'infusion, l'injection d'eau chaude sous pression est commandée par l'unité électronique et une fois la préparation de l'infusion terminée, cette unité commande la remontée du couvercle 6.

Au cours de ce mouvement de remontée, c'est-à-dire du déplacement du couvercle 6 selon la direction d'ouverture représenté aux figures 7 et 8, la butée d'éjection 42 de l'organe d'éjection 32 entre en contact avec la deuxième butée complémentaire 44, c'est-à-dire la face inférieure de la tige 46. Ce contact force le pivotement de l'organe d'éjection 32 depuis la position d'effacement jusqu'à une position médiane, précisément représentée à la figure 8, pour laquelle le caractère bistable de l'organe d'éjection 32 entraîne un déplacement automatique de celui-ci vers sa position d'éjection.

On notera qu'au cours de cette première phase d'ouverture, les becs (25, 26) des organes de prise (21, 22) sont venus en prise avec le bord inférieur de la collerette 9c de la capsule 9, et ont dégagé celle-ci du réceptacle 5. Dans la position intermédiaire de la figure 8, la capsule 9 est complètement dégagée du réceptacle 5.

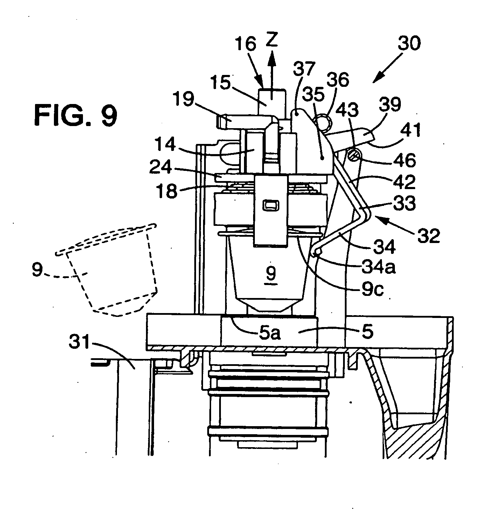

Immédiatement après la position intermédiaire de la figure 8, l'organe d'éjection 32 pivote automatiquement dans la position d'éjection. Ce mouvement obtenu grâce à l'instabilité créée par le ressort 36, est très rapide et le bras d'expulsion 34 vient alors percuter la capsule 9 comme cela est représenté à la figure 9. La capsule 9 qui est simplement suspendue entre les organes de prise (21, 22) est alors propulsée vers le bac de récupération 31, comme cela est indiqué en trait discontinu sur cette même figure.

L'organe d'éjection 32 est alors de nouveau en position stable d'éjection et le mouvement ascendant du couvercle 6 se poursuit jusqu'à atteindre la position d'ouverture telle que représentée à la figure 2, à l'exception de la présence de la capsule 9 tant qu'une nouvelle capsule n'a pas été introduite.

Les dispositifs d'extraction (20) et d'éjection (30) ainsi réalisés sont particulièrement simples. L'actionnement du dispositif d'éjection 30 n'est déclenché que par des contacts de butées et l'énergie nécessaire est simplement fournie par la torsion du ressort 36 entre les deux positions stables. Ceci est moins coûteux à fabriquer et plus fiable de fonctionnement que certains dispositifs connus mettant en oeuvre des liaisons cinématiques plus complexes pour le déplacement relatif des parties de la chambre d'infusion ou d'autres organes afin d'expulser les capsules usagées. De plus, les dispositifs d'extraction (20) et d'éjection (30) ne nécessitent pas d'actionneur électromécanique ou électrohydraulique supplémentaire par rapport à ceux nécessaires au déplacement des parties (5, 6) de la chambre d'infusion.

Le mode de réalisation décrit ci-dessus n'est nullement limitatif. Outre les variantes indiquées précédemment, il apparaîtra clairement à l'homme du métier que l'organe d'éjection pourrait être fixe par rapport au boîtier en prévoyant des première et deuxième butées complémentaires reliées à la partie mobile de la chambre d'infusion.

## Revendications

1. Machine pour préparer une infusion comprenant :
- un boîtier (2) ;
- une chambre d'infusion apte à recevoir une dose (9) de produit à infuser et délimitée au moins par une première partie (5) et une deuxième partie (6) mobiles l'une par rapport à l'autre entre une position de fermeture dite d'infusion et une position d'ouverture, ladite deuxième partie (6) au moins étant mobile par rapport au boîtier (2) ; et
- un dispositif d'éjection (30) apte à éjecter la dose (9) de produit infusé à l'écart des première et deuxième parties (5,6) en position d'ouverture,
**caractérisée en ce que** le dispositif d'éjection (30) comprend un organe d'éjection (32) mobile de manière bistable sous l'action d'un organe élastique (36) entre une position stable d'effacement dans laquelle il est situé à l'écart des première et deuxième parties (5, 6) en position d'infusion, et une position stable d'éjection dans laquelle il est amené au moins partiellement entre les première et deuxième parties (5, 6) en position d'ouverture, l'organe d'éjection (32) comprenant une butée d'effacement (41) et une butée d'éjection (42) aptes à coopérer par contact respectivement avec une première (43) et une deuxième (44) butées complémentaires, le déplacement de la deuxième partie (6) de la chambre d'infusion vers la position d'infusion provoquant le passage de l'organe d'éjection (32) en position d'effacement par coopération de la butée d'effacement (41) avec la première butée (43), et le déplacement de la deuxième partie (6) de la chambre d'infusion vers la position d'ouverture provoquant le passage de l'organe d'éjection (32) en position d'éjection par coopération de la butée d'éjection (42) avec la deuxième butée (44).

2. Machine selon la revendication 1, dans laquelle la deuxième partie (6) de la chambre d'infusion est mobile selon un mouvement de translation de direction déterminée (Z), l'organe d'éjection (32) étant monté pivotant autour d'un axe (35) perpendiculaire à ladite direction déterminée.

3. Machine selon la revendication 1 ou 2, dans laquelle l'organe d'éjection (32) est monté sur la deuxième partie (6) de la chambre d'infusion, et dans laquelle les première et deuxième butées complémentaires (43, 44) sont fixes et solidaires du boîtier (2).

4. Machine selon la revendication 3, dans laquelle l'organe d'éjection (32) est formé par une pièce en "L" dont une première branche (33) est montée pivotante par rapport à la deuxième partie (6) de la chambre d'infusion à proximité d'une extrémité libre de cette première branche, et dont une deuxième branche (34) forme un bras d'expulsion de la dose (9) de produit infusé.

5. Machine selon la revendication 4, dans laquelle, en position stable d'éjection, la première branche (33) de l'organe d'éjection (32) s'étend selon une direction sensiblement parallèle à la direction déterminée (Z) et la deuxième branche (34) s'étend parallèlement et à proximité d'une face d'extrémité (6b) de la deuxième partie (6) de la chambre d'infusion venant en regard contre la première partie (5) en position d'infusion.

6. Machine selon l'une quelconque des revendications 4 ou 5, dans laquelle la butée d'éjection (42) est constituée par une face extérieure de la première branche (33) de l'organe d'éjection, tandis que la butée d'effacement (41) est formée par une projection (39) solidaire de ladite première branche (33).

7. Machine selon l'une quelconque des revendications 3 à 6, dans laquelle l'organe d'éjection (32) en position stable d'effacement est situé au-delà du plan défini par les faces des extrémités respectives des première et deuxième parties (5, 6) en position d'infusion.

8. Machine selon l'une quelconque des revendications précédentes, dans laquelle les première et deuxième butées complémentaires (43, 44) sont formées respectivement par deux faces opposées d'une même tige (46).

9. Machine selon l'une quelconque des revendications 3 à 8, dans laquelle l'organe élastique (36) est un ressort de torsion présentant des extrémités montées entre un premier axe de pivotement (37) solidaire de la deuxième partie (6) de la chambre d'infusion, et un deuxième axe de pivotement (38) solidaire de l'organe d'éjection (32), les premier et deuxième axes (37, 38) formant des angles opposés sensiblement identiques par rapport au plan défini par le premier axe (37) et l'axe de pivotement (35) de l'organe d'éjection (32) pour chacune des positions stables de celui-ci.

10. Machine selon l'une quelconque des revendications précédentes, dans laquelle un dispositif d'extraction (20) est prévu pour sortir la dose (9) de produit infusé hors de la chambre d'infusion à la suite d'une opération d'infusion, et dans laquelle la butée d'éjection (42) du dispositif d'éjection (30) est agencée par rapport à la deuxième butée complémentaire (44) pour commander le passage de l'organe d'éjection (32) en position d'éjection une fois que le dispositif d'extraction (20) a extrait la dose (9) de produit infusé hors de la chambre d'infusion.

## Claims

1. Machine for preparing an infusion comprising:
- a housing (2);
- an infusion chamber that can receive a dose (9) of product to be infused and delimited at least by a first portion (5) and a second portion (6) that can move relative to one another between a closed infusion position and an open position, said second portion (6) at least being movable relative to the housing (2); and
- an ejection device (30) that can eject the dose (9) of infused product at a distance from the first and second portions (5, 6) in the open position, **characterised in that** the ejection device (30) comprises an ejection member (32) that can move in a bistable manner under the action of an elastic member (36) between a stable withdrawal position in which it is located at a distance from the first and second portions (5, 6) in the infusion position, and a stable ejection position in which it is brought at least partially between the first and second portions (5, 6) in the open position, the ejection member (32) comprising a withdrawal stop (41) and an ejection stop (42) that can cooperate by contact respectively with a first (43) and a second (44) additional stops, the displacement of the second portion (6) of the infusion chamber to the infusion position causing the ejection member (32) to move to the withdrawal position by the cooperation between the withdrawal stop (41) and the first stop (43), and the displacement of the second portion (6) of the infusion chamber towards the open position causing the ejection member (32) to move to the ejection position by the cooperation between the ejection stop (42) and the second stop (44).

2. Machine according to claim 1, in which the second portion (6) of the infusion chamber is movable according to a translational movement in a determined direction (Z), the ejection member (32) being pivotally mounted around a shaft (35) perpendicular to said determined direction.

3. Machine according to claim 1 or 2, in which the ejection member (32) is mounted on the second portion (6) of the infusion chamber, and in which the first and second additional stops (43, 44) are fixed and integral with the housing (2).

4. Machine according to claim 3, in which the ejection member (32) is formed by an L-shaped part whose first branch (33) is pivotally mounted relative to the second portion (6) of the infusion chamber in the vicinity of a free end of this first branch, and whose second branch (34) forms an arm for expulsing the dose (9) of infused product.

5. Machine according to claim 4, in which, in the stable ejection position, the first branch (33) of the ejection member (32) extends in a direction substantially parallel to the determined direction (Z) and the second branch (34) extends in parallel and in the vicinity of an end face (6b) of the second portion (6) of the infusion chamber coming perpendicular against the first portion (5) in the infusion position.

6. Machine according to any one of claims 4 or 5 in which the ejection stop (42) is formed by an outer face of the first branch (33) of the ejection member, whereas the withdrawal stop (41) is formed by a projection (39) integral with said first branch (33).

7. Machine according to any one of claims 3 to 6, in which the ejection member (32) in the stable withdrawal position is located beyond the plane defined by the faces of the respective ends of the first and second portions (5, 6) in the infusion position.

8. Machine according to any one of the preceding claims, in which the first and second additional stops (43, 44) are formed respectively by two opposite faces of a same rod (46).

9. Machine according to any one of claims 3 to 8, in which the elastic member (36) is a torsion spring with ends mounted between a first pivot pin (37) integral with the second portion (6) of the infusion chamber, and a second pivot pin (38) integral with the ejection member (32), the first and second pins (37, 38) forming substantially identical opposite angles with respect to the plane defined by the first pin (37) and the pivot pin (35) of the ejection member (32) for each of the latter's stable positions.

10. Machine according to one of the preceding claims, in which an extraction device (20) is provided for taking the dose (9) of infused product out of the infusion chamber after an infusion operation, and in which the ejection stop (42) of the ejection device (30) is arranged relative to the second additional stop (44) to control the passage of the ejection member (32) to its ejection position once the extraction device (20) has extracted the dose (9) of infused product out from the infusion chamber.

## Patentansprüche

1. Maschine zur Zubereitung von Getränken, umfassend:
- ein Gehäuse (2);
- eine Aufbrühkammer, die imstande ist, eine aufzubrühende Getränke-Dosis (9) aufzunehmen, und die von mindestens einem ersten Teil (5) und einem zweiten Teil (6) begrenzt wird, die zueinander zwischen einer Schließ- oder so genannten Aufbrühposition und einer Offenposition bewegbar sind, wobei der zweite Teil (6) mindestens in Bezug auf das Gehäuse (2) bewegbar ist; und
- eine Ausstoßvorrichtung (30), die imstande ist, die verbrauchte Getränke-Dosis (9) aus dem ersten und zweiten Teil (5,6) in Offenposition auszustoßen, **dadurch gekennzeichnet, dass** die Ausstoßvorrichtung (30) ein Ausstoßorgan (32) umfasst, das auf bistabile Weise unter Einwirkung eines elastischen Organs (36) zwischen einer stabilen Ausschwenkposition, in der es sich vom ersten und zweiten Teil (5, 6) in Aufbrühposition beabstandet befindet, und einer stabilen Ausstoßposition, in der es mindestens teilweise zwischen den ersten und zweiten Teil (5, 6) in Offenposition gebracht wird, bewegbar ist, wobei das Ausstoßorgan (32) einen Ausschwenkanschlag (41) und einen Ausstoßanschlag (42) umfasst, die imstande sind, mittels Kontakt jeweils mit einem ersten (43) und einem zweiten (44) Zusatzanschlag zusammenzuwirken, wobei die Verschiebung des zweiten Teils (6) der Aufbrühkammer in die Aufbrühposition den Übergang des Ausstoßorgans (32) in die Ausschwenkposition durch Zusammenwirken des Ausschwenkanschlags (41) mit dem ersten Anschlag (43) bewirkt, und wobei die Verschiebung des zweiten Teils (6) der Aufbrühkammer in die Offenposition den Übergang des Ausstoßorgans (32) in die Ausstoßposition durch Zusammenwirken des Ausstoßanschlags (42) mit dem zweiten Anschlag (44) bewirkt.

2. Maschine nach Anspruch 1, wobei der zweite Teil (6) der Aufbrühkammer gemäß einer Verschiebungsbewegung in festgelegter Richtung (Z) bewegbar ist, wobei das Ausstoßorgan (32) schwenkend um eine Achse (35) befestigt ist, die senkrecht zur festgelegten Richtung verläuft.

3. Maschine nach Anspruch 1 oder 2, wobei das Ausstoßorgan (32) auf dem zweiten Teil (6) der Aufbrühkammer befestigt ist, und wobei der erste und zweite Zusatzanschlag (43, 44) festsitzend und fest mit dem Gehäuse (2) verbunden sind.

4. Maschine nach Anspruch 3, wobei das Ausstoßorgan (32) von einem L-förmigen Teil gebildet wird, dessen erster Schenkel (33) schwenkend in Bezug auf den zweiten Teil (6) der Aufbrühkammer in der Nähe eines freien Endes dieses ersten Schenkels befestigt ist, und dessen zweiter Schenkel (34) einen Ausstoßarm für die verbrauchte Getränke-Dosis (9) bildet.

5. Maschine nach Anspruch 4, wobei sich in stabiler Ausstoßposition der erste Schenkel (33) des Ausstoßorgans (32) gemäß einer Richtung erstreckt, die im Wesentlichen parallel zur festgelegten Richtung (Z) verläuft, und sich der zweite Schenkel (34) parallel und in der Nähe einer Endseite (6b) des zweiten Teils (6) der Aufbrühkammer erstreckt, die dem ersten Teil (5) in Aufbrühposition gegenübertritt.

6. Maschine nach einem der Ansprüche 4 oder 5, wobei der Ausstoßanschlag (42) von einer Außenseite des ersten Schenkels (33) des Ausstoßorgans gebildet wird, während der Ausschwenkanschlag (41) von einem Überstand (39) gebildet wird, der fest mit dem ersten Schenkel (33) verbunden ist.

7. Maschine nach einem der Ansprüche 3 bis 6, wobei sich das Ausstoßorgan (32) in stabiler Ausschwenkposition jenseits der Ebene befindet, die von den jeweiligen Endseiten des ersten und des zweiten Teils (5, 6) in Aufbrühposition definiert wird.

8. Maschine nach einem der vorhergehenden Ansprüche, wobei der erste und der zweite Zusatzanschlag (43, 44) jeweils von zwei gegenüberliegenden Seiten einer gleichen Stange (46) gebildet werden.

9. Maschine nach einem der Ansprüche 3 bis 8, wobei das elastische Organ (36) eine Torsionsfeder ist, die Enden aufweist, die zwischen einer ersten Schwenkachse (37), die fest mit dem zweiten Teil (6) der Aufbrühkammer verbunden ist, und einer zweiten Schwenkachse (38), die fest mit dem Ausstoßorgan (32) verbunden ist, befestigt sind, wobei die erste und die zweite Achse (37, 38) gegenüberliegende Winkel bilden, die im Wesentlichen identisch sind in Bezug auf die Ebene, die von der ersten Achse (37) und der Schwenkachse (35) des Ausstoßorgans (32) für jede seiner stabilen Positionen definiert wird.

10. Maschine nach einem der vorhergehenden Ansprüche, wobei eine Abführvorrichtung (20) vorgesehen ist, um die verbrauchte Getränke-Dosis (9) aus der Aufbrühkammer nach einem Aufbrühvorgang zu entfernen, und wobei der Ausstoßanschlag (42) der Ausstoßvorrichtung (30) in Bezug auf den zweiten Zusatzanschlag (44) angeordnet ist, um den Übergang des Ausstoßorgans (32) in die Ausstoßposition zu bewirken, sobald die Abführvorrichtung (20) die verbrauchte Getränke-Dosis (9) aus der Aufbrühkammer abgeführt hat.
